# EUROPÄISCHE PATENTSCHRIFT

(11) **EP 1 521 689 B1**
(45) Veröffentlichungstag und Bekanntmachung des Hinweises auf die Patenterteilung: **03.05.2006**
(21) Anmeldenummer: 03763814.5
(22) Anmeldetag: 10.07.2003
(51) Int. Cl.: B60R 1/00

(54) **ELEKTRONISCHES SYSTEM FÜR EIN KRAFTFAHRZEUG**
ELECTRONIC SYSTEM FOR A MOTOR VEHICLE
SYSTEME ELECTRONIQUE POUR UN VEHICULE A MOTEUR

(30) Priorität: 12.07.2002 DE 10231843
(43) Veröffentlichungstag der Anmeldung: 13.04.2005
(73) Patentinhaber: Lucas Automotive GmbH, 56070 Koblenz (DE)
(72) Erfinder: BRASCHEL, Volker, 56564 Neuwied (DE)
(74) Vertreter: Schmidt, Steffen J.
(86) Internationale Anmeldenummer: PCT/EP2003/007518
(87) Internationale Veröffentlichungsnummer: WO 2004/007242

(56) Entgegenhaltungen:
- WO-A-97/49578
- DE-A- 19 838 886

## Beschreibung

Die Erfindung betrifft ein elektronisches System für ein Kraftfahrzeug, das ein elektronisches Steuergerät zum Steuern und/oder Regeln eines elektronischen Parkbremssystems umfasst, das über ein elektronisches Kommunikationssystem mit elektronischen Steuergeräten anderer elektronischer Systeme des Fahrzeugs gekoppelt ist, um durch Datenaustauschen mit den anderen elektronischen Systemen des Fahrzeugs zusammenzuwirken, wobei elektronische Sensoreinrichtungen zum Steuern und/oder Regeln von Betriebszuständen des Fahrzeugs mit den Betriebszuständen des Fahrzeugs in Beziehung stehende Größen erfassen, und wobei wenigstens eine elektronische Sensoreinrichtung in dem elektronischen Steuergerät zum Steuern und/oder Regeln des elektronischen Parkbremssystems aufgenommen ist.

Ein modernes Kraftfahrzeug ist mit einer Vielzahl elektronischer Systeme ausgerüstet. Dazu zählen unter anderem das elektronische Betriebsbremssystem mit dem Antiblockierregelsystem (ABS), dem Antriebsschlupfregelsystem (ASR) und dem Fahrdynamikregelsystem (FDR), das elektronische Parkbremssystem (EPB) oder die elektronische Motorleistungssteuerung (EMS). Solche elektronischen Systeme umfassen in bekannter Weise ein elektronisches Steuergerät, das über elektronische Sensoreinrichtungen mit Betriebszuständen des Fahrzeugs in Beziehung stehende Größen, z.B. im Fall des ABS den Schlupf der Fahrzeugräder oder im Fall der EMS die Drehzahl des Fahrzeugmotors, erfasst. Auf Grundlage der erfassten Größen steuert und/oder regelt das elektronische Steuergerät über entsprechende elektrische Stelleinrichtungen Betriebszustände des Fahrzeugs, um z.B. im Fall des ABS ein Blockieren der Fahrzeugräder zu verhindern oder im Fall des EMS die Leistung des Fahrzeugmotors anzupassen. Damit die einzelnen elektronischen Systeme zum Zusammenwirken Daten miteinander austauschen können, sind die elektronischen Steuergeräte über ein elektronisches Kommunikationssystem, z.B. CAN-Bus, miteinander gekoppelt.

Da die elektronischen Sensoreinrichtungen an einem für sie idealen Messort im Bereich des Fahrzeugs unterzubringen sind, z.B. ist eine elektronische Lenkwinkelsensoreinrichtung im Bereich der Lenksäule des Fahrzeugs anzuordnen, erfordern auch diese in der Regel ein eigenes elektronisches Steuergerät, das gleichfalls an das elektronische Kommunikationssystem anzukoppeln ist.

Dies bringt den Nachteil einer zunehmend großen Anzahl von elektronischen Steuergeräten im Kraftfahrzeug mit sich, vor allem im Hinblick darauf, dass moderne Kraftfahrzeuge zukünftig mit immer mehr und vielfältigeren elektronischen Systemen ausgerüstet werden. Dadurch steigen Aufwand und Kosten. Dazu trägt ganz wesentlich bei, dass die elektronischen Steuergeräte aufgrund ihrer Kopplung an das elektronische Kommunikationssystem sogar eigene Schnittstellen-Schaltkreise umfassen müssen.

Die DE 198 38 886 A1 (Oberbegrift von Anspruch 1) offenbart eine elektrische Fahrzeug-Feststellbremsanlage mit einer Steuereinrichtung, die dazu eingerichtet ist, eine Steuer- bzw. Regelungsstrategie zur Ansteuerung der elektrischen Feststellbremsanlage zu realisieren und einen Fahrerbremswunsch in entsprechende Steuersignale für die elektrische Feststellbremsanlage umzusetzen. Die Steuereinrichtung ist über ein CAN-Bussystem mit einer Mehrzahl von Einrichtungen zur Erfassung von Betriebszuständen des Fahrzeugs, einer Kontrolllampe, einer Warnlampe sowie mit einer hydraulischen, schlupfgeregelten Bremsanlage oder einer fremdansteuerbaren aktiven Betriebsbremse verbunden. Ein Neigungswinkelsensor ist in die Elektronik der Steuereinrichtung integriert.

Aus der WO 97/49578 A1 ist eine Steuereinrichtung für ein Kraftfahrzeug bekannt, die eine Mehrzahl von Sensoren zur Erfassung von Betriebszuständen des Kraftfahrzeugs umfasst. Die Steuereinrichtung steuert in Abhängigkeit des erfassten Betriebszustands des Kraftfahrzeugs Sicherheitseinrichtungen, wie z.B. eine Sicherheitsgurtspannvorrichtung oder einen Airbag an.

Die Erfindung ist auf die Aufgabe gerichtet, ein elektronisches System für ein Kraftfahrzeug mit einem elektronischen Steuergerät zum Steuern und/oder Regeln eines elektronischen Parkbremssystems bereitzustellen, das sich durch eine besonders hohe Betriebssicherheit auszeichnet. Zur Lösung der Aufgabe schlägt die Erfindung ein elektronisches System für ein Kraftfahrzeug vor, das die im Anspruch 1 genannten Merkmale aufweist.

Dabei ergibt sich der Vorteil, dass weniger elektronische Steuergeräte benötigt werden, so dass sich der Systemaufwand reduziert. Weil sich dadurch die Anzahl an Komponenten, wie z.B. Steuergerätegehäuse, elektrische Anschlüsse, sowie Schnittstellen-, Stromversorgungs- und Überwachungsschaltkreise, reduziert, ergibt sich ein wesentlicher Kostenvorteil. Darüber hinaus wird durch das Aufnehmen wenigstens einer elektronischen Sensoreinrichtung in einem der elektronischen Steuergeräte die Systemsicherheit erhöht, da die Anzahl störanfälliger elektrischer Verbindungen reduziert wird.

Die wenigstens eine in dem Steuergerät zum Steuern und/oder Regeln des elektronischen Parkbremssystems aufgenommene elektronische Sensoreinrichtung erfasst das querdynamische und/oder längsdynamische Verhalten des Fahrzeugs. Hauptbestandteil einer solchen elektronischen Sensoreinrichtung ist in bekannter Weise ein mikromechanisches Schwingungsgyrometer, das empfindlich auf Störungen aufgrund von Vibrationen und Temperaturschwankungen reagiert. Diesen Störungen kann entgegengewirkt werden, indem das elektronische Steuergerät, in dem die wenigstens eine Sensoreinrichtung aufgenommen ist, im Bereich des Fahrzeuginnenraums angeordnet wird.

Ein grosser Vorteil ist auch, dass das elektronische Steuergerät, in dem die wenigstens eine elektronische Sensoreinrichtung aufgenommen ist, das elektronische Parkbremssystem (EPB) des Kraftfahrzeugs steuert und/oder regelt. Dies ist insofern günstig, da das elektronische Steuergerät vorzugsweise im Fahrzeuginnenraum, z.B. unter der Rücksitzbank, angeordnet wird. Somit befindet es sich räumlich verhältnismäßig nahe an den elektrischen Stelleinrichtungen des EPB, die üblicherweise auf die Hinterradbremsen des Fahrzeugs wirken.

Des Weiteren ergeben sich dabei entscheidende Funktionsvorteile. So kann das EPB unmittelbar auf das von der wenigstens einen elektronischen Sensoreinrichtung erfasste Längsbeschleunigungssignal zugreifen, um daraus die Steigung der Fahrbahn zu ermitteln, und/oder um daraus einen Fahrzeugstillstand unabhängig von anderen elektronischen Systemen detektieren zu können. Dem Detektieren eines Fahrzeugstillstands kommt insbesondere aus Sicherheitsgründen eine sehr hohe Bedeutung zu, da das EPB bei Ausfall des elektronischen Kommunikationssystems oder anderer elektronischer Systeme eigenständig darüber zu entscheiden hat, ob die Park- bzw. Feststellbremse zu lösen oder zu betätigen ist.

In bevorzugter Weise ist vorgesehen, dass das elektronische Steuergerät zum Steuern und/oder Regeln des elektronischen Parkbremssystems, in dem die wenigstens eine elektronische Sensoreinrichtung aufgenommen ist, mit dem elektronischen Steuergerät, das das elektronische Betriebsbremssystem (ABS/ASR/FDR) steuert und/oder regelt, zusammenwirkt.

Ebenfalls betrifft die Erfindung ein Kraftfahrzeug, das mit dem erfindungsgemäßen elektronischen System ausgerüstet ist. Denn bei Betrachtung der Gesamtstruktur aller in einem Kraftfahrzeug zusammenwirkenden elektronischen Systeme kommen die erfindungsgemäßen Vorteile, die sich durch das Reduzieren der Anzahl elektrischer Steuergeräte ergeben, besonders zum tragen.

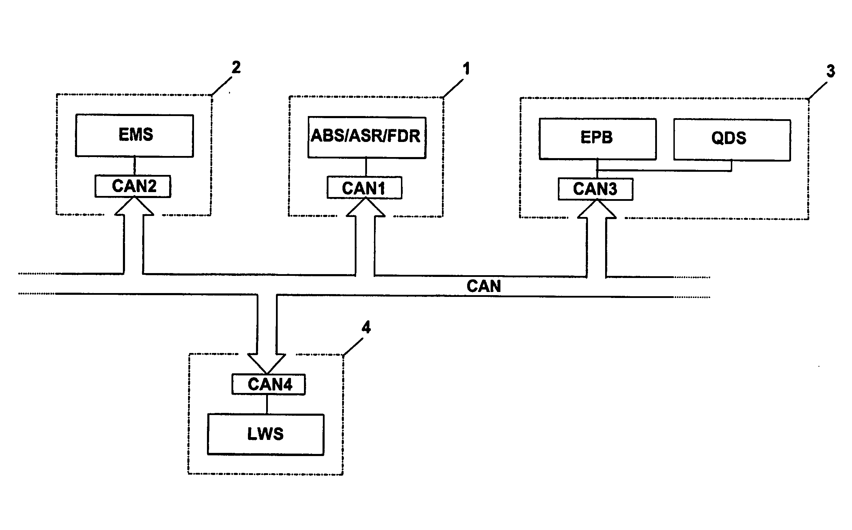

Ein bevorzugtes Ausführungsbeispiel der Erfindung und weitere Vorteile werden nachfolgend anhand der einzigen Zeichnung näher erläutert. Dazu ist in der Zeichnung das Zusammenwirken verschiedener elektronischer Systeme eines Kraftfahrzeugs schematisch dargestellt.

Bei den elektronischen Systemen handelt es sich um ein elektronisches Betriebsbremssystem, das ein Antiblockierregelsystem (ABS), ein Antriebsschlupfregelsystem (ASR) und ein Fahrdynamikregelsystem (FDR) umfasst, ein elektronisches Parkbrems- bzw. Feststellbremssystem (EPB) sowie eine elektronische Motorleistungssteuerung (EMS).

Die einzelnen elektronischen Systeme umfassen zum Steuern und/oder Regeln von Betriebszuständen des Fahrzeugs elektronische Steuergeräte 1, 2 und 3. Dazu erfassen die elektronischen Steuergeräte über elektronische Sensoreinrichtungen mit Betriebszuständen des Fahrzeuges in Beziehung stehende Größen, um die Betriebszustände des Fahrzeugs über entsprechende elektrische Stelleinrichtungen zu beeinflussen. Die elektronischen Steuergeräte 1, 2 und 3 sind über ein als "Controller Area Network" (CAN) bezeichnetes Bus- bzw. Kommunikationssystem miteinander gekoppelt, um durch Datenaustauschen zusammenzuwirken.

So wirkt das ASR mit der EMS zusammen, um den Antriebsschlupf nicht nur durch vom Fahrer unabhängiges Abbremsen des/der betroffenen Antriebsrades/-räder, sondern auch durch Reduzieren des Antriebsmomentes an dem/den betroffenen Antriebsrad/-rädern auf zuverlässige Werte zu regeln, so dass ein Durchdrehen des/der betroffenen Antriebsrades/-räder verhindert wird.

Ebenso wirkt das FDR mit der EMS zusammen, um den Fahrer in querdynamisch kritischen Situationen sowohl durch vom Fahrer unabhängiges Abbremsen einzelner Fahrzeugräder, als auch durch Reduzieren und/oder Erhöhen des Antriebsmomentes aktiv zu unterstützen, so dass ein seitliches Ausbrechen des Fahrzeugs verhindert wird.

Aufgrund des EPB ist es möglich das Lösen und Betätigen des Park- bzw. Feststellbremssystems automatisch durchzuführen. Dazu benötigt das EPB z.B. Informationen darüber, ob sich das Fahrzeug im Stillstand befindet und/oder ob der Zündschlüssel abgezogen ist, weshalb das EPB über das CAN mit dem ABS und EMS zusammenwirkt. So kann das EPB anhand der Geschwindigkeit des Fahrzeugs, die das ABS aus den Drehzahlen der einzelnen Fahrzeugräder bestimmt, feststellen, ob das Fahrzeug tatsächlich seinen Stillstand erreicht hat, wenn ein automatisches Betätigen des Park- bzw. Feststellbremssystems zu erfolgen hat.

An das CAN sind darüber hinaus die elektronische Lenkwinkelsensoreinrichtung (LWS) und die elektronische Querdynamiksensoreinrichtung (QDS) angekoppelt, die beide vorzugsweise mit dem FDR zusammenwirken. Die LWS erfasst den vom Fahrer eingestellten Lenkwinkel, aus dem das FDR das Sollverhalten bestimmt, während die QDS das tatsächliche querdynamische Verhalten des Fahrzeugs erfasst, aus dem das FDR das Istverhalten bestimmt, um durch Vergleichen des Soll- mit dem Istverhalten das Fahrzeugverhalten im querdynamischen Grenzbereich zu regeln. Da für das querdynamische Verhalten des Fahrzeugs charakteristisch, erfasst die QDS zumindest die Giergeschwindigkeit des Fahrzeugs um seine Hochachse und die Querbeschleunigung des Fahrzeugs. Vor allem bei allradgetriebenen Fahrzeugen erfasst die QDS weiterhin auch die Längsbeschleunigung des Fahrzeugs.

Für die LWS ist ein eigenes elektronisches Steuergerät 4 vorgesehen, wogegen die QDS in dem für das EPB vorgesehenen elektronischen Steuergerät 3 integriert ist.

Die an das CAN angekoppelten elektronischen Steuergeräte 1 bis 4 umfassen jeweils eine CAN-Schnittstelle CAN1 bis CAN4. Diese CAN-Schnittstellen verwalten den Datenaustausch über das CAN und entlasten auf diese Weise die eigentlichen Recheneinheiten der elektronischen Steuergeräte 1 bis 4, die in der Regel aufgrund ihres eigentlichen Funktionsumfangs voll ausgelastet sind.

Das CAN ermöglicht eine flexible Anordnung der elektronischen Steuergeräte 1 bis 4 im Bereich des Kraftfahrzeuges. Dadurch können die elektronischen Steuergeräte in unmittelbarer Umgebung der jeweils durch sie anzusteuernden elektrischen Stelleinrichtung(en) - nicht näher dargestellt - angeordnet werden oder mit diesen zu einer gemeinsamen Baueinheit integriert werden. So ist es z.B. üblich das für das elektronische Betriebsbremssystem ABS/ASR/FDR vorgesehene elektronische Steuergerät 1 mit dem die elektrischen Stelleinrichtungen (Elektromagnetventil, Elektromotor usw.) umfassenden Hydraulikaggregat oder elektromechanischen Aktuator zu einer Baueinheit zusammenzufassen, unabhängig davon, ob es sich um ein konventionelles Bremssystem mit zwischen Bremsdruckgebereinheit und Fahrzeugbremsen geschalteter ABS/ASR/FDR-Einheit, oder um ein elektrohydraulisches Bremssystem (EHB), oder um ein elektromechanisches Bremssystem (EMB) handelt. Demzufolge befindet sich das elektronische Steuergerät 1 üblicherweise räumlich im Bereich des Motorraums des Fahrzeugs.

Gleichermaßen können die elektronischen Steuergeräte in unmittelbarer Umgebung der ihr zugehörigen elektronischen Sensoreinrichtung(en) angeordnet werden oder mit diesen zu einer gemeinsamen Baueinheit integriert werden. So muss z.B. die LWS unmittelbar im Bereich der Lenksäule des Fahrzeugs angeordnet werden, um den vom Fahrer eingestellten Lenkwinkel zu erfassen. Deshalb ist idealerweise auch das die LWS und die zugehörige CAN-Schnittstelle CAN4 umfassende elektronische Steuergerät 4 räumlich im Bereich der Lenksäule des Fahrzeugs angeordnet.

Da die elektrische(n) Stelleinrichtung(en) - nicht näher dargestellt - des EPB in der Regel auf die Hinterradbremsen des Fahrzeugs wirken und im Falle eines sogenannten "cable-puller" Systems den konventionellen Handbremshebel ersetzen, bietet es sich an, das elektronische Steuergerät 3 des EPB räumlich im Bereich des Fahrzeuginnenraums anzuordnen, z.B. unter der Rücksitzbank oder in der Mittelkonsole, wodurch es geschützt untergebracht ist.

Die QDS ist in das elektronische Steuergerät 3 des EPB integriert. Gegenüber der Unterbringung der QDS in einem eigenen an das CAN angekoppelten elektronischen Steuergerät, hat dies zunächst Kostenvorteile, da Komponenten wie Gehäuse, elektrische Anschlüsse, Stromversorgungs- und Überwachungsschaltkreise, vor allem aber eine CAN-Schnittstelle eingespart werden. Darüber hinaus ergeben sich aber ganz wesentliche Funktionsvorteile.

Hauptbestandteil der QDS ist ein Gierratensensor, um die Giergeschwindigkeit des Fahrzeugs um seine Hochachse zu erfassen. Bei solchen Gierratensensoren handelt es sich bekannterweise um mikromechanische Schwingungsgyrometer, die das Problem aufweisen, dass sie sehr störanfällig gegenüber von extern einwirkenden Vibrationen sowie Temperaturschwankungen sind, was Fehlregelungen zur Folge haben kann. Dem wird durch die bevorzugte Unterbringung des elektronischen Steuergeräts 3 des EPB im Fahrzeuginnenraum entgegengewirkt.

Durch die Unterbringung des elektronischen Steuergerätes 3 im Fahrzeuginnenraum befindet sich die QDS auch in Nähe zum oder sogar im Schwerpunkt des Fahrzeugs, was die Messgenauigkeit erhöht, da das Ansprechverhalten des mikromechanischen Gyrometers genauer dem Verhalten des Fahrzeugs entspricht. Dies gilt inbesondere im Hinblick darauf, dass die QDS auch die Quer- und Längsbeschleunigung des Fahrzeugs erfasst.

Das EPB dient auch dazu, in Verbindung mit der EMS automatische Anfahrvorgänge durchzuführen. Um dies vor allem an Steigungen zu ermöglichen - sogenannte "hill-hold"-Funktion -, ist das EPB eigens mit einem Neigungs- bzw. Längsbeschleunigungssensor ausgestattet, um die Steigung der Fahrbahn zu ermitteln. Dieser Neigungssensor kann eingespart werden, da dem EPB die Längsbeschleunigung des Fahrzeugs unmittelbar durch das QDS bereitgestellt wird.

Technisch machbar ist auch eine Integration der QDS in das elektronische Steuergerät 1 des ABS/ASR/FDR. Dies bringt aber nicht die vorgenannten Vorteile, da das elektronische Steuergerät 1 des ABS/ASR/FDR bevorzugt im Motorraum des Fahrzeugs untergebracht ist, so dass die QDS starken Vibrationen und Temperaturschwankungen ausgesetzt wäre. Da das elektronische Steuergerät 1 des ABS/ASR/FDR wie erwähnt bevorzugt mit dem zugehörigen Hydraulikaggregat zu einer ABS/ASR/FDR-Baueinheit integriert wird, besteht das Problem, dass die Baueinheit je nach Fahrzeugtyp/-modell in unterschiedlichen Einbaulagen im Fahrzeug zu installieren ist. Dies bedeutet zusätzlichen Aufwand und Kosten, da ein standardisierter Herstellungsprozess der ABS/ASR/FDR-Baueinheiten für eine möglichst breite Palette von Fahrzeugtypen/-modellen nicht möglich ist. Denn die Einbaulage des mikromechanischen Schwingungsgyrometer der QDS muss in Bezug auf die ABS/ASR/FDR-Baueinheit jeweils der fahrzeugspezifischen Einbaulage angepasst werden, um eine ordnungsgemäße Funktion zu gewährleisten. Dieses Problem wird bei Integration der QDS in das elektronische Steuergerät 3 des EPB umgangen.

Es versteht sich, dass über das elektronische Kommunikationssystem nicht nur die elektronischen Steuergeräte der genannten elektronischen Systeme miteinander koppelbar sind, sondern je nach Ausrüstung des Kraftfahrzeugs auf gleiche Weise z.B. die elektronischen Steuergeräte einer elektronischen Getriebesteuerung, einer elektronischen Abstands-/Geschwindigkeitsregelung, eines elektronischen Fahrwerkregelsystems oder eines elektronischen Lenkungssystems ankoppelbar sind. Im Falle eines elektronischen Lenkungssystems kann die LWS in das elektronische Steuergerät des Lenkungssystems integriert werden, das zusammen mit der zugehörigen elektrischen Stelleinrichtung (z.B. Elektromotor) im Bereich der Lenksäule des Fahrzeugs angeordnet ist.

## Patentansprüche

1. Elektronisches System für ein Kraftfahrzeug, das ein elektronisches Steuergerät (3) zum Steuern und/oder Regeln eines elektronischen Parkbremssystems (EPB) umfasst, das über ein elektronisches Kommunikationssystem mit elektronischen Steuergeräten (1, 2, 4) anderer elektronischer Systeme (EMS, ABS/ASR/FDR) des Fahrzeugs gekoppelt ist, um durch Datenaustauschen mit den anderen elektronischen Systemen (EMS, ABS/ASR/FDR) des Fahrzeugs zusammenzuwirken, wobei elektronische Sensoreinrichtungen (QDS, LWS) zum Steuern und/oder Regeln von Betriebszuständen des Fahrzeugs mit den Betriebszuständen des Fahrzeugs in Beziehung stehende Größen erfassen, und wobei wenigstens eine elektronische Sensoreinrichtung (QDS) in dem elektronischen Steuergerät (3) zum Steuern und/oder Regeln des elektronischen Parkbremssystems (EPB) aufgenommen ist,
**dadurch gekennzeichnet, dass** das elektronische Steuergerät (3) zum Steuern und/oder Regeln des elektronischen Parkbremssystems (EPB) im Bereich des Fahrzeuginnenraums angeordnet ist, und dass die wenigstens eine in dem Steuergerät (3) zum Steuern und/oder Regeln des elektronischen Parkbremssystems (EPB) aufgenommene Sensoreinrichtung (QDS) eine Sensoreinrichtung (QDS) zur Erfassung des querdynamischen und des längsdynamischen Verhaltens des Fahrzeugs ist.

2. Elektronisches System nach Anspruch 1,
**dadurch gekennzeichnet, dass** das elektronische Steuergerät (3) zum Steuern und/oder Regeln des elektronischen Parkbremssystems (EPB) mit dem elektronischen Steuergerät (1), das das elektronische Betriebsbremssystem (ABS/ASR/FDR) steuert und/oder regelt, zusammenwirkt.

3. Kraftfahrzeug,
**dadurch gekennzeichnet, dass** das Kraftfahrzeug mit elektronischen Systemen nach einem der Ansprüche 1 oder 2 ausgerüstet ist.

## Claims

1. Electronic system for a motor vehicle which comprises an electronic controller (3) for controlling and/or regulating an electronic parking brake system (EPB) which is coupled via an electronic communication system to electronic controllers (1, 2, 4) of other electronic systems (EMS, ABS/ASR/FDR) of the vehicle in order to cooperate through data exchanges with the other electronic systems (EMS, ABS/ASR/FDR) of the vehicle, wherein electronic sensor devices (QDS, LWS) for controlling and/or regulating operating states of the vehicle sense quantities related to the operating states of the vehicle, and wherein at least one electronic sensor device (QDS) is accommodated in one electronic controller (3) for controlling and/or regulating the electronic parking brake system (EPB),
**characterised in that** the electronic controller (3) for controlling and/or regulating the electronic parking brake system (EPB) is disposed in the region of the vehicle interior and that the at least one sensor device (QDS) accommodated in the controller (3) for controlling and/or regulating the electronic parking brake system (EPB) is a sensor device (QDS) for sensing the laterally dynamic and the longitudinally dynamic behaviour of the vehicle.

2. Electronic system according to Claim 1,
**characterised in that** the electronic controller (3) for controlling and/or regulating the electronic parking brake system (EPB) cooperates with the electronic controller (1) which controls and/or regulates the electronic service brake system (ABS/ASR/FDR).

3. Motor vehicle, **characterised in that** the motor vehicle is equipped with electronic systems according to one of Claims 1 or 2.

## Revendications

1. Système électronique pour un véhicule automobile, comprenant un appareil de commande électronique (3) pour la commande et/ou la régulation d'un système électronique de frein de stationnement (EPB), couplé, par l'intermédiaire d'un système de communication électronique, à des appareils de commande électroniques (1, 2, 4) d'autres systèmes électroniques (EMS, ABS/ASR/FDR) du véhicule, afin de coopérer, par des échanges de données, avec les autres systèmes électroniques (EMS, ABS/ASR/FDR) du véhicule, des dispositifs de détection électroniques (QDS, LWS) enregistrant, pour la commande et/ou la régulation d'états de fonctionnement du véhicule, des grandeurs liées aux états de fonctionnement du véhicule, et au moins un dispositif de détection (QDS) étant logé dans l'appareil de commande électronique (3) pour la commande et/ou la régulation du système électronique de frein de stationnement (EPB),
**caractérisé en ce que**
l'appareil de commande électronique (3) pour la commande et/ou la régulation du système électronique de frein de stationnement (EPB) est disposé dans la zone de l'habitacle du véhicule, et
le au moins un dispositif de détection (QDS) logé dans l'appareil de commande (3) pour la commande et/ou la régulation du système de frein de stationnement électronique (EPB) est un dispositif de détection (QDS) pour l'enregistrement du comportement de dynamique transversale et de dynamique longitudinale du véhicule.

2. Système électronique selon la revendication 1,
**caractérisé en ce que** l'appareil de commande électronique (3) pour la commande et/ou la régulation du système électronique de frein de stationnement (EPB) coopère avec l'appareil de commande électronique (1) qui commande et/ou régule le système de freinage de service électronique (ABS/ASR/FDR).

3. Véhicule automobile,
**caractérisé en ce que** le véhicule automobile est équipé de systèmes électroniques selon l'une des revendications 1 ou 2.
